# EUROPEAN PATENT APPLICATION

(11) **EP 4 088 888 A1**
(43) Date of publication of application: **16.11.2022**
(21) Application number: 22171636.8
(22) Date of filing: 04.05.2022
(51) Int. Cl.: B25J 9/16, G05B 19/418

(54) **OBJECT HEIGHT DETECTION FOR PALLETIZING AND DEPALLETIZING OPERATIONS**

(30) Priority: 14.05.2021 US 202117320939
(71) Applicant: Intelligrated Headquarters, LLC, Mason, OH 45040 (US)
(72) Inventor: MAKHAL, Abhijit, Charlotte, 28202 (US); NILSON, Benjamin, Charlotte, 28202 (US); EVANS, Thomas, Charlotte, 28202 (US)
(74) Representative: Haseltine Lake Kempner LLP

(57) **Abstract**

Various embodiments described herein relate to techniques for object height detection for palletizing operations and/or depalletizing operations. In this regard, an automated industrial system comprises at least a column portion, a robot arm portion, and an end effector configured to grasp an object. An image-capturing device is mounted onto the automated industrial system and is configured to rotate, based on movement of the robot arm portion, to scan the object grasped by the end effector and to generate image-capturing data associated with the object. Furthermore, a processing device is configured to determine height data for the object based on the image-capturing data. The processing device is also configured to determine location data for the object with respect to a conveyor system based on the height data.

## Description

### TECHNICAL FIELD

The present disclosure relates generally to automated industrial systems, and more particularly to robotics related to conveyor systems.

### BACKGROUND

In a robotic conveyor system that performs palletizing operations, a robotic arm and an end effector are generally employed to pick up objects from a conveyor and to place the objects on a pallet. Similarly, in a robotic conveyor system that performs depalletizing operations, a robotic arm and an end effector are generally employed to pick up objects from a pallet and to place the objects on a conveyor. It is generally desirable for a robotic conveyor system to perform palletizing operations or depalletizing operations based on an estimated dimensionality of objects for palletizing operations or depalletizing operations. However, it is generally difficult for a robotic conveyor system to estimate dimensionality of objects for palletizing operations or depalletizing operations. Furthermore, dimensionality of objects often varies during palletizing operations or depalletizing operations. As such, a robotic conveyor system that performs palletizing operations or depalletizing operations is often prone to inefficiencies and/or decreased performance.

### BRIEF SUMMARY

In accordance with an embodiment of the present disclosure, a system comprises an automated industrial system, an image-capturing device, and a processing device. The automated industrial system comprises at least a column portion, a robot arm portion, and an end effector configured to grasp an object. The image-capturing device is mounted onto the automated industrial system. Furthermore, the image-capturing device is configured to rotate, based on movement of the robot arm portion, to scan the object grasped by the end effector and to generate image-capturing data associated with the object. The processing device is configured to determine height data for the object based on the image-capturing data. The processing device is also configured to determine location data for the object with respect to a conveyor system based on the height data

In accordance with another embodiment of the present disclosure, a system comprises an automated industrial system, a first image-capturing device, a second image-capturing device, and a processing device. The automated industrial system comprises at least a column portion, a robot arm portion, and an end effector configured to grasp an object. The first image-capturing device is mounted onto the automated industrial system. The first image-capturing device is also configured to rotate, based on movement of the robot arm portion, to scan the object grasped by the end effector and to generate first image-capturing data associated with the object. The second image-capturing device is mounted onto the automated industrial system. The second image-capturing device is also configured to rotate, based on the movement of the robot arm portion, to scan the object grasped by the end effector and to generate second image-capturing data associated with the object. The processing device is configured to determine height data for the object based on the first image-capturing data and the second image-capturing data. The processing device is also configured to determine location data for the object with respect to a conveyor system based on the height data.

In accordance with another embodiment of the present disclosure, a computer-implemented method is provided. The computer-implemented method provides for receiving, by a device comprising a processor, image-capturing data from a rotatable image-capturing device associated with an automated industrial system, the image-capturing data associated with an image-capturing process for an object grasped by an end effector associated with an automated industrial system. The computer-implemented method also provides for determining, by the device, height data for the object based on the image-capturing data. Furthermore, the computer-implemented method provides for determining, by the device, location data for the object with respect to a conveyor system based on the height data.

In accordance with yet another embodiment of the present disclosure, a computer program product is provided. The computer program product comprises at least one computer-readable storage medium having program instructions embodied thereon, the program instructions executable by a processor to cause the processor to receive image-capturing data from a rotatable image-capturing device associated with an automated industrial system, the image-capturing data associated with an image-capturing process for an object grasped by an end effector associated with an automated industrial system. The program instructions are also executable by the processor to cause the processor to determine height data for the object based on the image-capturing data. Furthermore, the program instructions are executable by the processor to cause the processor to determine location data for the object with respect to a conveyor system based on the height data.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 illustrates a robotic conveyor system that provides object height detection for palletizing operations and/or depalletizing operations, in accordance with one or more embodiments described herein;
FIG. 2 illustrates another robotic conveyor system that provides object height detection for palletizing operations and/or depalletizing operations, in accordance with one or more embodiments described herein;
FIG. 3 illustrates another robotic conveyor system that provides object height detection for palletizing operations and/or depalletizing operations, in accordance with one or more embodiments described herein;
FIG. 4 illustrates another robotic conveyor system that provides object height detection for palletizing operations and/or depalletizing operations, in accordance with one or more embodiments described herein;
FIG. 5 illustrates an exemplary processing device to facilitate object height detection for palletizing operations and/or depalletizing operations, in accordance with one or more embodiments described herein;
FIG. 6 illustrates another exemplary processing device to facilitate object height detection for palletizing operations and/or depalletizing operations, in accordance with one or more embodiments described herein;
FIG. 7 illustrates an exemplary automated industrial system associated with object height detection for palletizing operations and/or depalletizing operations, in accordance with one or more embodiments described herein;
FIG. 8 illustrates an exemplary system that facilitates object height detection for palletizing operations and/or depalletizing operations, in accordance with one or more embodiments described herein; and
FIG. 9 illustrates a flow diagram for facilitating object height detection for palletizing operations and/or depalletizing operations, in accordance with one or more embodiments described herein.

### DETAILED DESCRIPTION

Various embodiments of the present invention now will be described more fully hereinafter with reference to the accompanying drawings, in which some, but not all embodiments of the invention are shown. Indeed, the invention may be embodied in many different forms and should not be construed as limited to the embodiments set forth herein. Rather, these embodiments are provided so that this disclosure will satisfy applicable legal requirements. The term "or" is used herein in both the alternative and conjunctive sense, unless otherwise indicated. The terms "illustrative," "example," and "exemplary" are used to be examples with no indication of quality level. Like numbers refer to like elements throughout.

The phrases "in an embodiment," "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature may be optionally included in some embodiments, or it may be excluded.

In material handling environments (e.g., distribution centers, shipping centers, warehouses, factories, etc.), it is often desirable to transport objects (e.g., packages, parcels, boxes, cases, cartons, pallets, etc.) along a conveyor belt. To assist with transportation of objects in material handling environments, a robotic conveyor system that performs palletizing operations and/or depalletizing operations can be employed. In a robotic conveyor system that performs palletizing operations, a robotic arm and an end effector are generally employed to pick up objects from a conveyor and to place the objects on a pallet. Similarly, in a robotic conveyor system that performs depalletizing operations, a robotic arm and an end effector are generally employed to pick up objects from a pallet and to place the objects on a conveyor. It is generally desirable for a robotic conveyor system to perform palletizing operations or depalletizing operations based on an estimated dimensionality of objects for palletizing operations or depalletizing operations.

To estimate dimensionality of objects for palletizing operations and/or depalletizing operations, a vision system can be employed to estimate position and/or orientation for an end effector of the robotic conveyor system to pick up respective objects. For example, a camera for a robotic conveyor system can be located above objects for palletizing operations and/or depalletizing operations. For palletizing operations and/or depalletizing operations containing objects of the same size (e.g., containing a single type of object), a camera located above the objects (e.g., to estimate position and/or orientation for an end effector of the robotic conveyor system) is generally sufficient to perform the palletizing operations and/or the depalletizing operations. However, for palletizing operations and/or depalletizing operations containing objects of different size (e.g., containing multiple types of objects with different heights), a camera located above the objects (e.g., to estimate position and/or orientation for an end effector of the robotic conveyor system) often leads to inefficiencies and/or decreased performance for the robotic conveyor system. For example, a top-down view of a camera located above the objects can only provide a two-dimensional top view of objects. As such, a robotic conveyor system is generally programmed to pick up all objects to a defined height (e.g., a maximum height) irrespective of an actual height of objects, thereby creating sub-optimal motion for a robotic arm of the robotic conveyor system. These inefficiencies can also result in a delay of transportation of objects along a conveyor belt in material handling environment and/or a delay in unloading the objects from a conveyor belt in material handling environment.

Thus, to address these and/or other issues, object height detection for palletizing operations and/or depalletizing operations is disclosed herein. In one or more embodiments, the object height detection for palletizing operations and/or depalletizing operations provides an improved robotic conveyor system with improved performance, improved efficiency, improved flow of objects, and/or improved speed of transportation of objects. In one or more embodiments, the object height detection for objects can be provided in parallel to a picking operation for the objects.

In one or more embodiments, an image-capturing device such as, for example, a light detection and ranging (LiDAR) device, can be mounted on a motor to allow the image-capturing device to be rotated about a horizontal axis for the image-capturing device. The image-capturing device mounted on the motor can also be attached to a robot or another mechanical structure to focus acquisition of image-capturing data (e.g., LiDAR data) related to an end effector of the robot. For instance, in one or more embodiments while an object is grasped by the end effector of the robot, a signal can be transmitted to the image-capturing device to move (e.g., rotate) the image-capturing device to move in a negative axis. As such, while the object is being picked up by the end effector of the robot in an upward direction, the image-capturing device can move in a downward direction. In response to the image-capturing data (e.g., the LiDAR data) crossing the object, a variation in the image-capturing data can be obtained to indicate a start of an image-capturing process for the object. In one or more embodiments, the start of the image-capturing process for the object can indicate that a position of the robot arm and/or the end effector is sufficient such that the object will not collide with other objects proximate to the object. Additionally, another variation in the image-capturing data can be obtained to indicate an end of the image-capturing process for the object. In one or more embodiments, a degree of motion of the image-capturing device (e.g., a distance traveled by the image-capturing device from the start of the image-capturing process to the end of the image-capturing process) can be calculated and/or utilized as an estimated height of the object. In one or more embodiments, one or more motion commands for the robot (e.g., the robot arm and/or the end effector of the robot) can be determined based on the estimated height of the object. In various embodiments, a location for placing the object onto a conveyor belt or a pallet can be determined based on the estimated height of the object. Additionally, in certain embodiments, one or more validation measurements and/or one or more performance measurements for the robot can be determined based on the estimated height of the object.

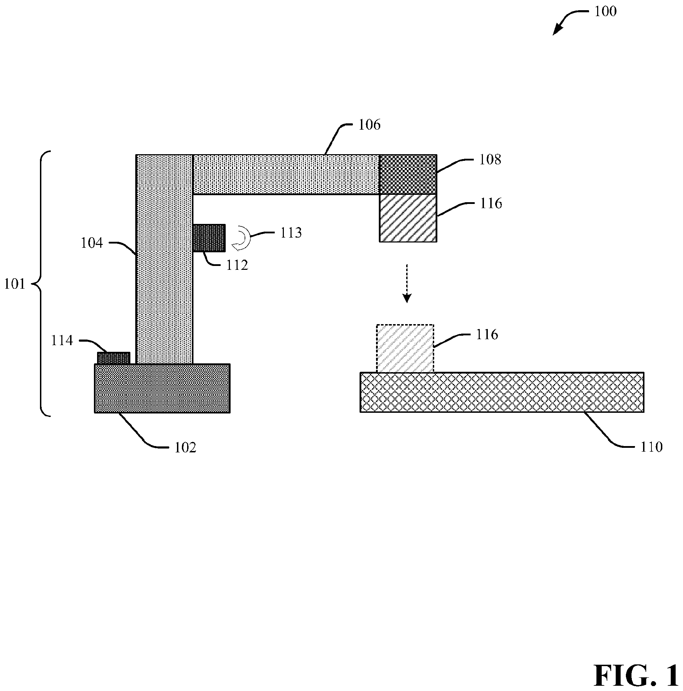

FIG. 1 illustrates a system 100 that provides an exemplary environment within which one or more described features of one or more embodiments of the disclosure can be implemented. The system 100 can be a robotic conveyor system. According to an embodiment, the system 100 includes an automated industrial system 101 to facilitate a practical application of object height detection for palletizing operations and/or depalletizing operations associated with the automated industrial system 101. In one or more embodiments, the automated industrial system 101 can be a robotics system associated with palletizing operations and/or depalletizing operations. The automated industrial system 101 can be related to one or more technologies to facilitate object height detection for palletizing operations and/or depalletizing operations. Moreover, the automated industrial system 101 can provide an improvement to one or more technologies such as conveyor system technologies, conveyor belt technologies, robotics technologies, sensor systems, material handling technologies, sortation system technologies, mixed stock-keeping unit (SKU) depalletizer technologies, mixed SKU palletizer technologies, industrial technologies, manufacturing technologies, distribution center technologies, warehouse technologies, automation technologies, imaging technologies, asset tracking and monitoring technologies, scanning technologies, digital technologies and/or other technologies. In an implementation, the automated industrial system 101 can improve performance of a conveyor system. For example, the automated industrial system 101 can provide improved efficiency for a conveyer system, improved handling of objects transported via a conveyer system, improved flow of objects via a conveyer system, and/or increased speed of transportation of objects via a conveyer system as compared to conventional conveyor systems. Additionally, by providing the object height detection disclosed herein, optimal motion for the one or more portions of the automated industrial system 101 can be provided. For example, providing the object height detection disclosed herein, optimal motion for a robot arm and/or an end effector of the automated industrial system 101 can be provided.

The automated industrial system 101 includes a base portion 102, a column portion 104, a robot arm portion 106, and/or an end effector 108. In one or more embodiments, the base portion 102, the column portion 104, the robot arm portion 106, and/or the end effector 108 can correspond to a robotic system (e.g., a robot) configured for palletizing and/or depalletizing of objects with respect to a conveyor system 110. The conveyor system 110 can include one or more conveyor belts in a material handling environment (e.g., a distribution center, a shipping center, a warehouse, a factory, a manufacturing plant, an industrial plant, etc.). Furthermore, the conveyor system 110 can be a mechanism that transports, directs and/or routs one or more objects. Additionally or alternatively, the conveyor system 110 can include one or more pallets to facilitate transportation and/or routing of one or more objects. In an embodiment, the conveyor system 110 include a case conveyor, a tote conveyor, a polybag conveyor, a transportation conveyor, a pallet conveyor, an accumulation conveyor, a vertical indexing conveyor, or another type of conveyor system. In certain embodiments, the conveyor system 110 can additionally include an actuator that converts rotary motion into linear motion for one or more conveyor belts of the conveyor system 110. For example, in one embodiment, the actuator of the conveyor system 110 can be an electric linear actuator that employs a motor to control speed of one or more conveyor belts of the conveyor system 110.

The base portion 102 can be a mechanical structure that provides support for the column portion 104. For example, the column portion 104 can be attached to the base portion 102. The column portion 104 can be mechanical structure that provides support for the robot arm portion 106. For example, the robot arm portion 106 can be attached to the column portion 104. The robot arm portion 106 can be configured to move according to one or more axis. Furthermore, the end effector 108 can be attached to the robot arm portion 106. The end effector 108 can be configured to grasp an object 116. For example, the end effector 108 can be configured as a gripper (e.g., a gripper mechanism) or another tool to facilitate grasping of the object 116. The object 116 can be a physical item, an element, a device, or the like that is to be transported via the conveyor system 110. For example, the object 116 can be a package, a parcel, a box, a case, a carton, a pallet and/or another object transported via the conveyor system 110. In certain embodiments, the object 116 can be a dynamic object with a location that is not fixed. For example, the object 116 can be shipped-in, shipped-out, or otherwise moved via the conveyor system 110. The object 116 can also comprise a certain height, a certain size, a certain shape, a certain color, and/or another physical characteristic. In an embodiment, the end effector 108 can obtain the object 116 from a pallet to perform one or more depalletizing operations associated with the object 116 such that the object 116 can be placed on a conveyor belt of the conveyor system 110. In another embodiment, the end effector 108 can obtain the object 116 from a conveyor belt to perform one or more palletizing operations associated with the object 116 such that the object 116 can be placed on a pallet of the conveyor system 110.

In one or more embodiments, an image-capturing device 112 is integrated with the automated industrial system 101. For example, the image-capturing device 112 can be mounted onto the automated industrial system 101. In an embodiment, the image-capturing device 112 can be mounted on the column portion 104. In another embodiment, the image-capturing device 112 can be mounted on the robot arm portion 106. However, it is to be appreciated that, in certain embodiments, the image-capturing device 112 can be mounted on another portion (e.g., another mechanical structure, another robotic structure, etc.) of the automated industrial system 101. Additionally, in certain embodiments, a processing device 114 is integrated with the automated industrial system 101. For example, in certain embodiments, the processing device 114 can be mounted to and/or integrated into the base portion 102, the column portion 104, the robot arm portion 106, or another portion of the automated industrial system 101. In an alternate embodiment, at least a portion of the processing device 114 can be implemented on a server system. For example, in certain embodiments, the image-capturing device 112 can transmit, via a network, image-processing data to at least a portion of the processing device 114 implemented on a server system. The network can be a communications network that employs wireless technologies and/or wired technologies to transmit data between the image-capturing device 112 and the processing device 114. For example, the network can be a Wi-Fi network, a Near Field Communications (NFC) network, a Worldwide Interoperability for Microwave Access (WiMAX) network, a personal area network (PAN), a short-range wireless network (e.g., a Bluetooth^{®} network), an infrared wireless (e.g., IrDA) network, an ultra-wideband (UWB) network, an induction wireless transmission network, and/or another type of network.

In one or more embodiments, the image-capturing device 112 can be configured to rotate. For example, in one or more embodiments, the image-capturing device 112 can be configured to perform a rotation operation 113 based on movement of the robot arm portion 106. In certain embodiments, the image-capturing device 112 can be mounted to a motor that facilitates the rotation operation 113. As such, the image-capturing device 112 can be a rotatable image-capturing device 112. The image-capturing device 112 can perform the rotation operation 113 to scan the object 116 grasped by the end effector 108. In certain embodiments, the image-capturing device 112 can be configured to rotate about an axis of the image-capturing device 112. In certain embodiments, the axis of the image-capturing device can be parallel to a conveyor belt (e.g., a conveyor belt surface) of the conveyor system 110. In certain embodiments, the axis of the image-capturing device can be parallel to a pallet (e.g., a pallet surface) of the conveyor system 110. Additionally or alternatively, the image-capturing device 112 can be configured to rotate with respect to the movement of the robot arm portion 106. In certain embodiments, the image-capturing device 112 can be configured to rotate inversely with respect to the movement of the robot arm portion 106. For example, in response to movement of the robot arm portion 106 in an upward direction, the image-capturing device 112 can be configured to rotate in a downward direction. In another example, in response to movement of the robot arm portion 106 in a downward direction, the image-capturing device 112 can be configured to rotate in an upward direction. Furthermore, the image-capturing device 112 can be configured to generate image-capturing data associated with the object 116 based on the rotation operation 113 associated with the image-capturing device 112.

In an embodiment, the image-capturing device 112 can include one or more sensors configured to scan the object 116 to generate the image-capturing data associated with the object 116. The image-capturing device 112 can include one or more image-capturing devices. For instance, in an embodiment, the image-capturing device 112 can be one or more laser scanning device (e.g., one or more LiDAR devices). In certain embodiments where the image-capturing device 112 is a LiDAR device, the image-capturing data generated by the image-capturing device 112 can be LiDAR data associated with the object 116. In another embodiment, the image-capturing device 112 can be one or more cameras (e.g., one or more camera units, one or more two-dimensional (2D) cameras, one or more three-dimensional (3D) cameras, etc.). In certain embodiments where the image-capturing device 112 is a camera device, the image-capturing data generated by the image-capturing device 112 can be point cloud data associated with the object 116. However, it is to be appreciated that, in certain embodiments, the image-capturing device 112 can be a different type of image-capturing device and/or the image-capturing data can be a different type of image-capturing data. In certain embodiments, the image-capturing device 112 can include an embedded processor (e.g., an embedded processor that is different than the processing device 114) configured to control the image-capturing device 112.

In one or more embodiments, the processing device 114 can be configured to determine height data for the object 116 based on the image-capturing data. The height data can correspond to a length between a top surface of the object 116 and a bottom surface of the object 116. In certain embodiments, the processing device 114 can be configured to identify, based on the image-capturing data, a start of an image-capturing process associated with the object 116 and an end of the image-capturing process associated with the object 116. For example, the start of an image-capturing process can correspond to a portion of the image-capturing data that corresponds to a top surface of the object 116 and the end of the image-capturing process can correspond to another portion of the image-capturing data that corresponds to a bottom surface of the object 116. In an embodiment, the start of the image-capturing process and/or the end of the image-capturing process can correspond to certain degree of variation and/or a certain pattern in the image-capturing data. Furthermore, the processing device 114 can be configured to determine the height data for the object 116 based on the start of the image-capturing process and the end of the image-capturing process. In certain embodiments, the processing device 114 can be configured to determine the height data based on distance data (e.g., a degree of rotation) for the image-capturing device 112 during an image-capturing process associated with the object 116. For example, a distance traveled by the image-capturing device 112 during the rotation operation 113 can be determined based on a starting location for image-capturing device 112 at the start of an image-capturing process and an ending location for the image-capturing device 112 at the end of an image-capturing process. In certain embodiments, the processing device 114 can be configured to determine the height data based on distance data for the robot arm portion 106 during an image-capturing process associated with the object 116. For example, the distance data can be determined based on a starting coordinate for the robot arm portion 106 at the start of an image-capturing process and an ending coordinate for the robot arm portion 106 at the end of an image-capturing process.

Additionally, in one or more embodiments, the processing device 114 can be configured to determine location data for the object 116 with respect to a conveyor belt of the conveyor system 110 or another surface (e.g., a pallet surface) of the conveyor system 110 based on the height data. For example, the location data can correspond to a certain coordinate for the robot arm portion 106 such that the end effector 108 can release the object 116. In certain embodiments, the processing device 114 can be configured to determine one or more movement commands for the robot arm portion 106 and/or the end effector 108 based on the height data. In certain embodiments, the processing device 114 can be configured to control a gripper command for the end effector 108 with respect to the object 116 based on the height data. For example, the location data can correspond to a certain coordinate for robot arm portion 106 to initiate a gripper release command for the end effector 108. In certain embodiments, the processing device 114 can be configured to control a movement command for the robot arm portion 106 with respect to a conveyor belt of the conveyor system 110 based on the height data. For example, the processing device 114 can be configured to determine an ending coordinate for the robot arm portion 106 such that the end effector 108 can release the object 116. In certain embodiments, based on the location data, the object 116 can be placed on a conveyor belt of the conveyor system 110 or another surface (e.g., a pallet surface) of the conveyor system 110.

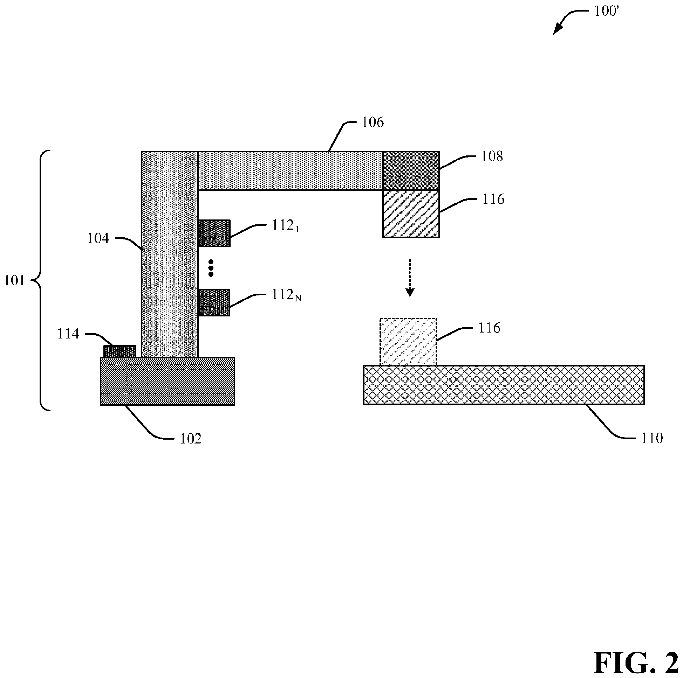

FIG. 2 illustrates a system 100' that provides an exemplary environment within which one or more described features of one or more embodiments of the disclosure can be implemented. The system 100' can be an alternate embodiment of the system 100. Furthermore, the system 100' can be a robotic conveyor system. The system 100' includes the automated industrial system 101 and the conveyor system 110. In one or more embodiments, the automated industrial system 101 includes the base portion 102, the column portion 104, the robot arm portion 106, and/or the end effector 108. Furthermore, in one or more embodiments, a set of image-capturing devices 112_{1-N} and/or the processing device 114 are integrated with the automated industrial system 101, where N is an integer. In an embodiment, the respective image-capturing devices from the set of image-capturing devices 112_{1-N} can include one or more sensors configured to scan the object 116 to generate the respective image-capturing data associated with the object 116. In an embodiment, image-capturing device 112₁ can be a first LiDAR device, image-capturing device 112₂ can be a second LiDAR device, etc. In another embodiment, image-capturing device 112₁ can be a first camera device, image-capturing devices 112₂ can be a second camera device, etc.

In one or more embodiments, the set of image-capturing devices 112_{1-N} can be integrated with the automated industrial system 101. For example, the image-capturing device 112 can be mounted onto the automated industrial system 101. In an embodiment, the set of image-capturing devices 112_{1-N} can be mounted on the column portion 104. For example, in certain embodiments, the set of image-capturing devices 112_{1-N} can be arranged in a vertical line (e.g., a vertical axis) with respect to the column portion 104. In another embodiment, the set of image-capturing devices 112_{1-N} can be mounted on the robot arm portion 106. For example, in certain embodiments, the set of image-capturing devices 112_{1-N} can be arranged along an axis with respect to the robot arm portion 106. However, it is to be appreciated that, in certain embodiments, the set of image-capturing devices 112_{1-N} can be mounted on another portion (e.g., another mechanical structure, another robotic structure, etc.) of the automated industrial system 101. In one or more embodiments, respective image-capturing devices from the set of image-capturing devices 112_{1-N} can be configured to rotate. For example, in one or more embodiments, respective image-capturing devices from the set of image-capturing devices 112_{1-N} can be configured to perform a rotation operation (e.g., the rotation operation 113) based on movement of the robot arm portion 106. In an embodiment, respective image-capturing devices from the set of image-capturing devices 112_{1-N} can be configured to rotate about a respective horizontal axis. For example, the image-capturing device 112₁ can be configured to rotate about a first horizontal axis and the image-capturing device 112₂ can be configured to rotate about a second horizontal axis parallel to the first horizontal axis. The respective image-capturing devices from the set of image-capturing devices 112_{1-N} can perform the rotation operation to scan the object 116 grasped by the end effector 108. In certain embodiments, the respective image-capturing devices from the set of image-capturing devices 112_{1-N} can be configured to rotate about a horizontal axis parallel to a conveyor belt or a pallet surface of the conveyor system 110. Additionally or alternatively, the respective image-capturing devices from the set of image-capturing devices 112_{1-N} can be configured to rotate with respect to the movement of the robot arm portion 106. In certain embodiments, the respective image-capturing devices from the set of image-capturing devices 112_{1-N} can be configured to rotate inversely with respect to the movement of the robot arm portion 106.

The respective image-capturing devices from the set of image-capturing devices 112_{1-N} can be configured to generate respective image-capturing data associated with the object 116. For example, in certain embodiments, image-capturing device 112₁ can generate first image-capturing data associated with the object 116, image-capturing device 112₂ can generate second image-capturing data associated with the object 116, etc. In one or more embodiments, the processing device 114 can be configured to determine the height data for the object 116 based on the respective image-capturing data provided by the respective image-capturing devices from the set of image-capturing devices 112_{1-N}. For example, the processing device 114 can be configured to determine the height data for the object 116 based on the first image-capturing data associated with the image-capturing device 112₁, the second image-capturing data associated with the image-capturing device 112₂, etc. In one or more embodiments, the processing device 114 can be configured to identify a start of an image-capturing process associated with the object and/or an end of the image-capturing process associated with the object based on the respective image-capturing data provided by the respective image-capturing devices from the set of image-capturing devices 112_{1-N}. For example, the processing device 114 can be configured to identify a start of an image-capturing process associated with the object and/or an end of the image-capturing process associated with the object based on the first image-capturing data associated with the image-capturing device 112₁, the second image-capturing data associated with the image-capturing device 112₂, etc. Additionally, in one or more embodiments, the processing device 114 can be configured to determine the height data for the object based on the start of the image-capturing process and the end of the image-capturing process.

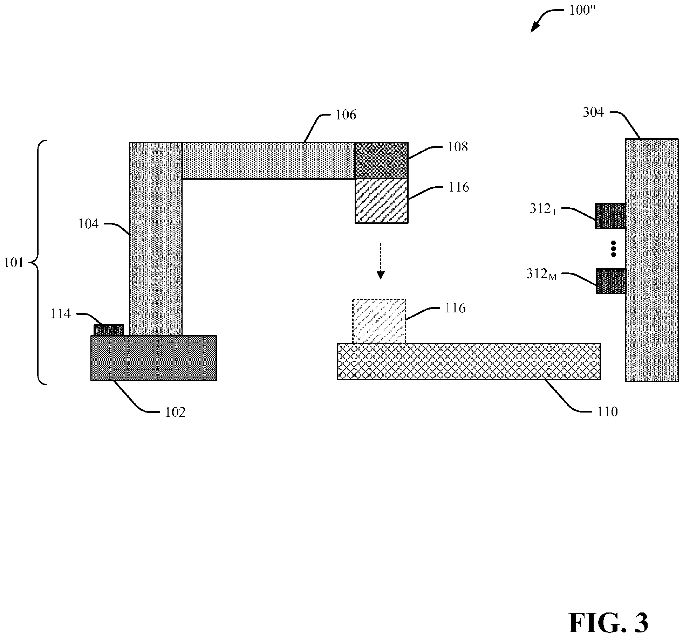

FIG. 3 illustrates a system 100" that provides an exemplary environment within which one or more described features of one or more embodiments of the disclosure can be implemented. The system 100" can be an alternate embodiment of the system 100 and/or the system 100'. Furthermore, the system 100" can be a robotic conveyor system. The system 100" includes the automated industrial system 101, the conveyor system 110 and a column portion 304. In one or more embodiments, the automated industrial system 101 includes the base portion 102, the column portion 104, the robot arm portion 106, and/or the end effector 108. In one or more embodiments, the processing device 114 are integrated with the automated industrial system 101. Furthermore, in one or more embodiments, a set of image-capturing devices 312_{1-M} is integrated with the column portion 304, where M is an integer. In an aspect, the column portion 304 associated with the set of image-capturing devices 312_{1-M} can be a first column portion of the automated industrial system 101 and the column portion 104 can be a second column portion of the automated industrial system 101 that is attached to the robot arm portion 106. In another aspect, the column portion 304 can be located at a certain distance from the column portion 104 attached to the robot arm portion 106. In certain embodiments, the column portion 304 is a stand-alone column or another mechanical structure of the automated industrial system 101.

The set of image-capturing devices 312_{1-M} can include one or more image-capturing devices. In an embodiment, the respective image-capturing devices from the set of image-capturing devices 312_{1-M} can include one or more sensors configured to scan the object 116 to generate the respective image-capturing data associated with the object 116. In an embodiment, image-capturing device 312₁ can be a first LiDAR device, image-capturing device 312₂ can be a second LiDAR device, etc. In another embodiment, image-capturing device 312₁ can be a first camera device, image-capturing devices 312₂ can be a second camera device, etc. In certain embodiments, the set of image-capturing devices 312_{1-M} can be mounted on the column portion 304. For example, in certain embodiments, the set of image-capturing devices 312_{1-M} can be arranged in a vertical line (e.g., a vertical axis) with respect to the column portion 304. In one or more embodiments, respective image-capturing devices from the set of image-capturing devices 312_{1-M} can be configured to rotate. For example, in one or more embodiments, respective image-capturing devices from the set of image-capturing devices 312_{1-M} can be configured to perform a rotation operation (e.g., the rotation operation 113) based on movement of the robot arm portion 106. In an embodiment, respective image-capturing devices from the set of image-capturing devices 312_{1-M} can be configured to rotate about a respective horizontal axis. For example, the image-capturing device 312₁ can be configured to rotate about a first horizontal axis and the image-capturing device 312₂ can be configured to rotate about a second horizontal axis parallel to the first horizontal axis. The respective image-capturing devices from the set of image-capturing devices 312_{1-M} can perform the rotation operation to scan the object 116 grasped by the end effector 108. In certain embodiments, the respective image-capturing devices from the set of image-capturing devices 312_{1-M} can be configured to rotate about a horizontal axis parallel to a conveyor belt or a pallet surface of the conveyor system 110. Additionally or alternatively, the respective image-capturing devices from the set of image-capturing devices 312_{1-M} can be configured to rotate with respect to the movement of the robot arm portion 106. In certain embodiments, the respective image-capturing devices from the set of image-capturing devices 312_{1-M} can be configured to rotate inversely with respect to the movement of the robot arm portion 106.

The respective image-capturing devices from the set of image-capturing devices 312_{1-M} can be configured to generate respective image-capturing data associated with the object 116. For example, in certain embodiments, image-capturing device 312₁ can generate first image-capturing data associated with the object 116, image-capturing device 312₂ can generate second image-capturing data associated with the object 116, etc. In one or more embodiments, the processing device 114 can be configured to determine the height data for the object 116 based on the respective image-capturing data provided by the respective image-capturing devices from the set of image-capturing devices 312_{1-M}. For example, the processing device 114 can be configured to determine the height data for the object 116 based on the first image-capturing data associated with the image-capturing device 312₁, the second image-capturing data associated with the image-capturing device 312₂, etc. In one or more embodiments, the processing device 114 can be configured to identify a start of an image-capturing process associated with the object and/or an end of the image-capturing process associated with the object based on the respective image-capturing data provided by the respective image-capturing devices from the set of image-capturing devices 312_{1-M}. For example, the processing device 114 can be configured to identify a start of an image-capturing process associated with the object and/or an end of the image-capturing process associated with the object based on the first image-capturing data associated with the image-capturing device 312₁, the second image-capturing data associated with the image-capturing device 312₂, etc. Additionally, in one or more embodiments, the processing device 114 can be configured to determine the height data for the object based on the start of the image-capturing process and the end of the image-capturing process.

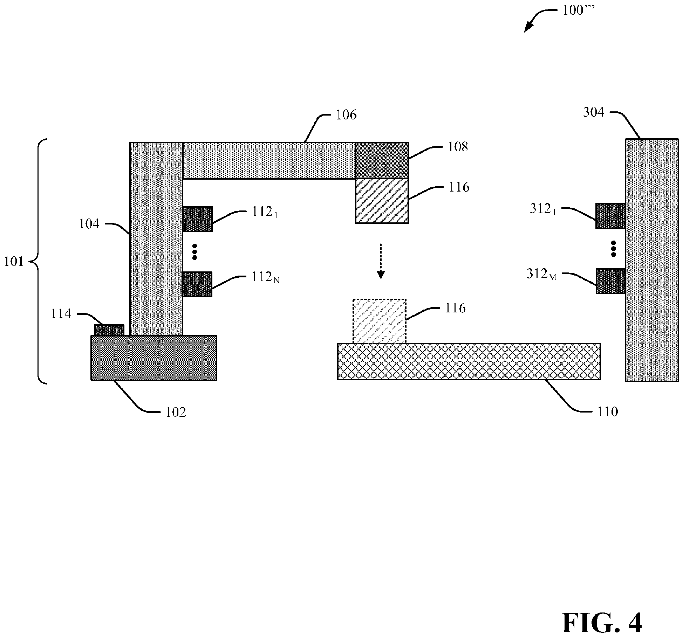

FIG. 4 illustrates a system 100'" that provides an exemplary environment within which one or more described features of one or more embodiments of the disclosure can be implemented. The system 100'" can be an alternate embodiment of the system 100, the system 100', and/or the system 100". Furthermore, the system 100'" can be a robotic conveyor system. The system 100'" includes the automated industrial system 101, the conveyor system 110, and the column portion 304. In one or more embodiments, the automated industrial system 101 includes the base portion 102, the column portion 104, the robot arm portion 106, and/or the end effector 108. In one or more embodiments, the set of image-capturing devices 112_{1-N} and/or the processing device 114 are integrated with the automated industrial system 101. Furthermore, in one or more embodiments, the set of image-capturing devices 312_{1-M} is integrated with the column portion 304. In an aspect, the column portion 304 associated with the set of image-capturing devices 312_{1-M} can be a first column portion of the automated industrial system 101 and the column portion 104 associated with the set of image-capturing devices 112_{1-N} can be a second column portion of the automated industrial system 101. In another aspect, the column portion 304 can be located at a certain distance from the column portion 104. In certain embodiments, the column portion 304 is a stand-alone column or another mechanical structure of the automated industrial system 101.

In one or more embodiments, the set of image-capturing devices 112_{1-N} can be integrated with the automated industrial system 101. For example, the image-capturing device 112 can be mounted onto the automated industrial system 101. In an embodiment, the set of image-capturing devices 112_{1-N} can be mounted on the column portion 104. For example, in certain embodiments, the set of image-capturing devices 112_{1-N} can be arranged in a vertical line (e.g., a vertical axis) with respect to the column portion 104. In another embodiment, the set of image-capturing devices 112_{1-N} can be mounted on the robot arm portion 106. For example, in certain embodiments, the set of image-capturing devices 112_{1-N} can be arranged along an axis with respect to the robot arm portion 106. However, it is to be appreciated that, in certain embodiments, the set of image-capturing devices 112_{1-N} can be mounted on another portion (e.g., another mechanical structure, another robotic structure, etc.) of the automated industrial system 101. In one or more embodiments, respective image-capturing devices from the set of image-capturing devices 112_{1-N} can be configured to rotate. For example, in one or more embodiments, respective image-capturing devices from the set of image-capturing devices 112_{1-N} can be configured to perform a rotation operation (e.g., the rotation operation 113) based on movement of the robot arm portion 106. The respective image-capturing devices from the set of image-capturing devices 112_{1-N} can perform the rotation operation to scan the object 116 grasped by the end effector 108. In certain embodiments, the respective image-capturing devices from the set of image-capturing devices 112_{1-N} can be configured to rotate about a horizontal axis parallel to a conveyor belt or a pallet surface of the conveyor system 110. Additionally or alternatively, the respective image-capturing devices from the set of image-capturing devices 112_{1-N} can be configured to rotate with respect to the movement of the robot arm portion 106. In certain embodiments, the respective image-capturing devices from the set of image-capturing devices 112_{1-N} can be configured to rotate inversely with respect to the movement of the robot arm portion 106.

Additionally, in one or more embodiments, the set of image-capturing devices 312_{1-M} can include one or more image-capturing devices. In certain embodiments, the set of image-capturing devices 312_{1-M} can be mounted on the column portion 304. For example, in certain embodiments, the set of image-capturing devices 312_{1-M} can be arranged in a vertical line (e.g., a vertical axis) with respect to the column portion 304. In one or more embodiments, respective image-capturing devices from the set of image-capturing devices 312_{1-M} can be configured to rotate. For example, in one or more embodiments, respective image-capturing devices from the set of image-capturing devices 312_{1-M} can be configured to perform a rotation operation (e.g., the rotation operation 113) based on movement of the robot arm portion 106. The respective image-capturing devices from the set of image-capturing devices 312_{1-M} can perform the rotation operation to scan the object 116 grasped by the end effector 108. In certain embodiments, the respective image-capturing devices from the set of image-capturing devices 312_{1-M} can be configured to rotate about a horizontal axis parallel to a conveyor belt or a pallet surface of the conveyor system 110. Additionally or alternatively, the respective image-capturing devices from the set of image-capturing devices 312_{1-M} can be configured to rotate with respect to the movement of the robot arm portion 106. In certain embodiments, the respective image-capturing devices from the set of image-capturing devices 312_{1-M} can be configured to rotate inversely with respect to the movement of the robot arm portion 106.

The respective image-capturing devices from the set of image-capturing devices 112_{1-N} can be configured to generate respective image-capturing data associated with the object 116. For example, in certain embodiments, image-capturing device 112₁ can generate first image-capturing data associated with the object 116, image-capturing device 112₂ can generate second image-capturing data associated with the object 116, etc. Furthermore, in certain embodiments, the respective image-capturing devices from the set of image-capturing devices 312_{1-M} can also be configured to generate respective image-capturing data associated with the object 116. For example, in certain embodiments, image-capturing device 312₁ can generate third image-capturing data associated with the object 116, image-capturing device 312₂ can generate fourth image-capturing data associated with the object 116, etc. In one or more embodiments, the processing device 312 can be configured to determine the height data for the object 116 based on respective image-capturing data provided by respective image-capturing devices from the set of image-capturing devices 112_{1-N} and/or the set of image-capturing devices 312_{1-M}. For example, in certain embodiments, the processing device 312 can be configured to determine the height data for the object 116 based on the first image-capturing data associated with the image-capturing device 112₁, the second image-capturing data associated with the image-capturing device 112₂, the third image-capturing data associated with the image-capturing device 312₁, the fourth image-capturing data associated with the image-capturing device 312₂, etc.

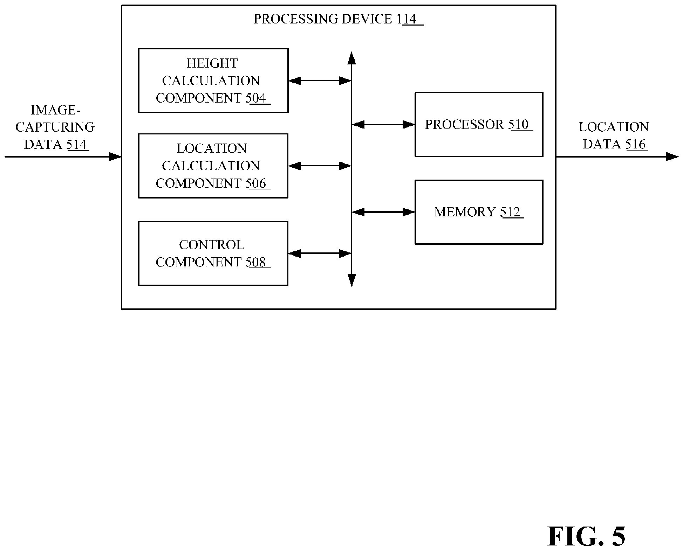

FIG. 5 illustrates an exemplary embodiment of the processing device 114 within which one or more described features of one or more embodiments of the disclosure can be implemented. The processing device 114 can include a height calculation component 504, a location calculation component 506 and/or a control component 508. Additionally, in certain embodiments, the processing device 114 can include a processor 510 and/or a memory 512. In certain embodiments, one or more aspects of the processing device 114 (and/or other systems, apparatuses and/or processes disclosed herein) can constitute executable instructions embodied within a computer-readable storage medium (e.g., the memory 512). For instance, in an embodiment, the memory 512 can store computer executable component and/or executable instructions (e.g., program instructions). Furthermore, the processor 510 can facilitate execution of the computer executable components and/or the executable instructions (e.g., the program instructions). In an example embodiment, the processor 510 can be configured to execute instructions stored in the memory 512 or otherwise accessible to the processor 510.

The processor 510 can be a hardware entity (e.g., physically embodied in circuitry) capable of performing operations according to one or more embodiments of the disclosure. Alternatively, in an embodiment where the processor 510 is embodied as an executor of software instructions, the software instructions can configure the processor 510 to perform one or more algorithms and/or operations described herein in response to the software instructions being executed. In an embodiment, the processor 510 can be a single core processor, a multi-core processor, multiple processors internal to the processing device 114, a remote processor (e.g., a processor implemented on a server), and/or a virtual machine. In certain embodiments, the processor 510 can be in communication with the memory 512, the height calculation component 504, the location calculation component 506 and/or the control component 508 via a bus to, for example, facilitate transmission of data among the processor 510, the memory 512, the height calculation component 504, the location calculation component 506 and/or the control component 508. The processor 510 can be embodied in a number of different ways and can, in certain embodiments, include one or more processing devices configured to perform independently. Additionally or alternatively, the processor 510 can include one or more processors configured in tandem via a bus to enable independent execution of instructions, pipelining of data, and/or multi-thread execution of instructions. The memory 512 can be non-transitory and can include, for example, one or more volatile memories and/or one or more non-volatile memories. In other words, for example, the memory 512 can be an electronic storage device (e.g., a computer-readable storage medium). The memory 512 can be configured to store information, data, content, one or more applications, one or more instructions, or the like, to enable the processing device 114 to carry out various functions in accordance with one or more embodiments disclosed herein. As used herein in this disclosure, the term "component," "system," "device," and the like, can be and/or can include a computer-related entity. For instance, "a component," "a system," "a device," and the like disclosed herein can be either hardware, software, or a combination of hardware and software. As an example, a component can be, but is not limited to, a process executed on a processor, a processor, circuitry, an executable component, a thread of instructions, a program, and/or a computer entity.

The processing device 114 (e.g., the height calculation component 504 of the processing device 114) can receive image-capturing data 514. The image-capturing data 514 can be provided by one or more image-capturing devices such as the image-capturing device 112 and/or one or more image-capturing devices from the set of image-capturing devices 112_{1-N} and/or the set of image-capturing devices 312_{1-M}. In one or more embodiments, the height calculation component 504 can be configured to determine height data for the object 116 based on the image-capturing data 514. The height data can correspond to a length between a top surface of an object (e.g., the object 116) and a bottom surface of the object. In certain embodiments, the height calculation component 504 can be configured to identify, based on the image-capturing data 514, a start of an image-capturing process associated with the object and an end of the image-capturing process associated with the object. For example, the start of an image-capturing process can correspond to a portion of the image-capturing data that corresponds to a top surface of the object and the end of the image-capturing process can correspond to another portion of the image-capturing data that corresponds to a bottom surface of the object. Furthermore, the height calculation component 504 can be configured to determine the height data for the object based on the start of the image-capturing process and the end of the image-capturing process. In certain embodiments, the height calculation component 504 can be configured to determine the height data based on distance data for an image-capturing device (e.g., the image-capturing device 112 or one or more image-capturing devices from the set of image-capturing devices 112_{1-N} and/or the set of image-capturing devices 312_{1-M}) during an image-capturing process associated with the object. For example, a degree of rotation for an image-capturing device can be determined based on a starting coordinate for the image-capturing device at the start of an image-capturing process and an ending coordinate for the image-capturing device at the end of an image-capturing process. In certain embodiments, the height calculation component 504 can be configured to determine the height data based on distance data for a robot arm portion (e.g., the robot arm portion 106) during an image-capturing process associated with the object. For example, the distance data can be determined based on a starting coordinate for the robot arm portion at the start of an image-capturing process and an ending coordinate for the robot arm portion at the end of an image-capturing process.

Additionally, in one or more embodiments, the location calculation component 506 can be configured to determine location data 516 for the object with respect to the conveyor system 110 based on the height data. For example, the location calculation component 506 can be configured to determine location data 516 for the object with respect to a conveyor belt of the conveyor system 110 based on the height data. In another example, the location calculation component 506 can be configured to determine location data 516 for the object with respect to a pallet (e.g., a pallet surface) of the conveyor system based on the height data. For example, the location data 516 can correspond to a certain coordinate for the robot arm portion such that an end effector (e.g., the end effector 108) attached to the robot arm portion can release the object. In certain embodiments, the control component 508 can be configured to control a gripper command for the end effector with respect to the object based on the height data. For example, the location data 516 can correspond to a certain coordinate for the control component 508 to initiate a gripper release command for the end effector. In certain embodiments, the control component 508 can be configured to control a movement command for the robot arm portion with respect to a conveyor belt or another surface based on the height data. For example, the control component 508 can be configured to determine an ending coordinate for the robot arm portion such that the end effector can release the object (e.g., to place the object on the conveyor belt or the surface).

In certain embodiments, the control component 508 can generate one or more control signals for the automated industrial system 101 (e.g., for the robot arm portion 106 and/or the end effector 108) based on the location data 516. In certain embodiments, the control component 508 can be one or more movement commands for one or more portions of the automated industrial system 101 (e.g., for the robot arm portion 106 and/or the end effector 108). In certain embodiments, the control component 508 can modify one or more settings the automated industrial system 101 (e.g., for the robot arm portion 106 and/or the end effector 108) based on the location data 516. The control component 508 can generate the one or more control signals to facilitate, for example, palletizing or depalletizing associated with the object 116. In certain embodiments, the one or more control signals can include a value to increase or decrease speed of movement for a portion of the automated industrial system 101 (e.g., for the robot arm portion 106 and/or the end effector 108). For example, the one or more control signals can include a certain positive value to increase a speed of a portion of the automated industrial system 101 (e.g., for the robot arm portion 106 and/or the end effector 108) by a certain amount. In another example, the one or more control signals can include a certain negative value to decrease a speed of a portion of the automated industrial system 101 (e.g., for the robot arm portion 106 and/or the end effector 108) by a certain amount. Additionally or alternatively, in certain embodiments, the one or more control signals can include a value to control a direction of movement for the robot arm portion 106. For example, the one or more control signals can include a certain value (e.g., a first binary value) to control a direction of the robot arm portion 106 in an upward direction. In another example, the one or more control signals can include a certain value (e.g., a first binary value) to control a direction of the robot arm portion 106 in a downward direction.

In certain embodiments, the control component 508 can generate and/or modify one or more control policies associated with a portion of the automated industrial system 101 (e.g., for the robot arm portion 106 and/or the end effector 108). For example, a control policy can provide an optimal location for an object with respect to the conveyor system 110. The one or more control policies can include one or more rules and/or one or more actions to facilitate an optimal location for an object with respect to the conveyor system 110. The one or more rules and/or the one or more actions can be related to movement of the robot arm portion 106 and/or location of a gripper command for the end effector 108. As such, the processing device 114 can provide the location data 516 and/or the one or more control signals to improve performance of the conveyor system 110, to improve efficiency of the conveyor system 110, to improve flow of objects transported via the conveyor system 110, and/or to improve speed of objects transported via the conveyor system 110.

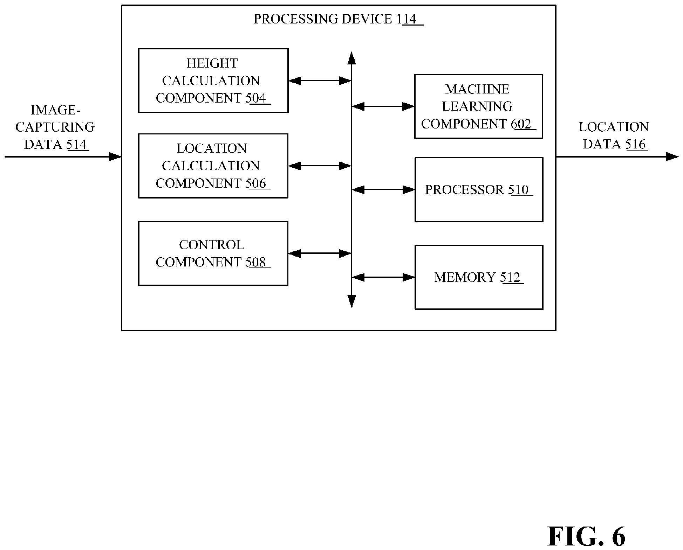

FIG. 6 illustrates another exemplary embodiment of the processing device 114 within which one or more described features of one or more embodiments of the disclosure can be implemented. The processing device 114 can include the height calculation component 504, the location calculation component 506, the control component 508, and/or a machine learning component 602. Additionally, in certain embodiments, the processing device 114 can include the processor 510 and/or the memory 512. The machine learning component 604 can employ a machine learning model that is trained to determine height data and/or location data for an object. In an embodiment, the machine learning model can be a convolutional neural network that is trained to determine height data and/or location data for an object. For instance, in an embodiment, the convolutional neural network can be a deep neural network that is trained to analyze image-capturing data based on a shared-weights architecture and/or translation invariance characteristics between a series of convolutional layers, one or more pooling layers, one or more fully connected layers and/or one or more normalization layers. In certain embodiments, the machine learning component 604 can modify one or more weights and/or one or more parameters for one or more convolutional layers of the machine learning model based on height data and/or location data determined for an object. In certain embodiments, the machine learning component 604 can determine one or more classifications, one or more correlations, one or more inferences, one or more patterns, one or more features and/or other information related to the image-capturing data 514 to facilitate determining height data and/or the location data 516 for an object. In certain embodiments, the machine learning component 604 can employ machine learning to determine a top surface of an object based on the image-capturing data 514, a bottom surface of an object based on the image-capturing data 514, a start of an image-capturing process associated with the image-capturing data 514, and an end of an image-capturing process associated with the image-capturing data 514, and/or another type of features associated with the image-capturing data 514. In another aspect, the machine learning component 604 height data and/or location data for an object based on historical image-capturing data associated with one or more other objects.

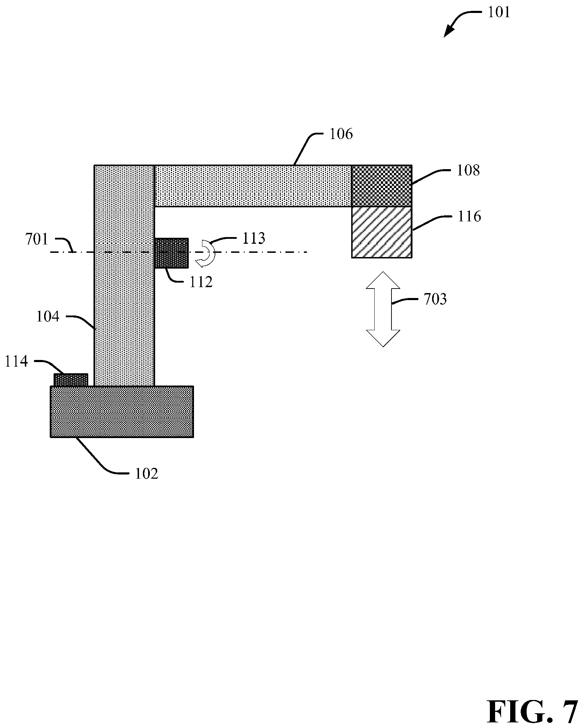

FIG. 7 illustrates an exemplary embodiment of the automated industrial system 101 that provides an exemplary environment within which one or more described features of one or more embodiments of the disclosure can be implemented. In one or more embodiments, the automated industrial system 101 includes the base portion 102, the column portion 104, the robot arm portion 106, and/or the end effector 108. Furthermore, in one or more embodiments, the image capturing device 112 (e.g., the set of image-capturing devices 112_{1-N}) and/or the processing device 114 are integrated with the automated industrial system 101. In one or more embodiments, the image-capturing device 112 can be configured to perform the rotation operation 113 based on movement 703 of the robot arm portion 106. The image-capturing device 112 can perform the rotation operation 113 to scan the object 116 grasped by the end effector 108. In an example, the movement 703 of the robot arm portion 106 can be associated with placement of the object 116 onto a conveyor belt (e.g., a conveyor belt of the conveyor system 110). In another example, the movement 703 of the robot arm portion 106 can be associated with obtaining the object 116 from a pallet. In certain embodiments, the image-capturing device 112 can be configured to rotate about an axis 701 via the rotation operation 113. The axis 701 can be an axis with respect to the image-capturing device 112 (e.g., with respect to a sensor of the image-capturing device 112). In certain embodiments, the axis 701 can be parallel to a conveyor belt of the conveyor system 110. Alternatively, in certain embodiments, the axis 701 can be parallel to another surface (e.g., a pallet surface) of the conveyor system 110. Additionally or alternatively, the image-capturing device 112 can be configured to rotate with respect to the movement 703 of the robot arm portion 106. In certain embodiments, the image-capturing device 112 can be configured to rotate inversely with respect to the movement 703 of the robot arm portion 106. For instance, in response to the movement 703 of the robot arm portion 106 being in a first direction, the rotation operation 113 can rotate the image-capturing device 112 in a second direction. In one embodiment in response to the movement 703 of the robot arm portion 106 being in an upward direction, the rotation operation 113 can rotate the image-capturing device 112 in a downward direction. In another embodiment in response to the movement 703 of the robot arm portion 106 being in a downward direction, the rotation operation 113 can rotate the image-capturing device 112 in an upward direction.

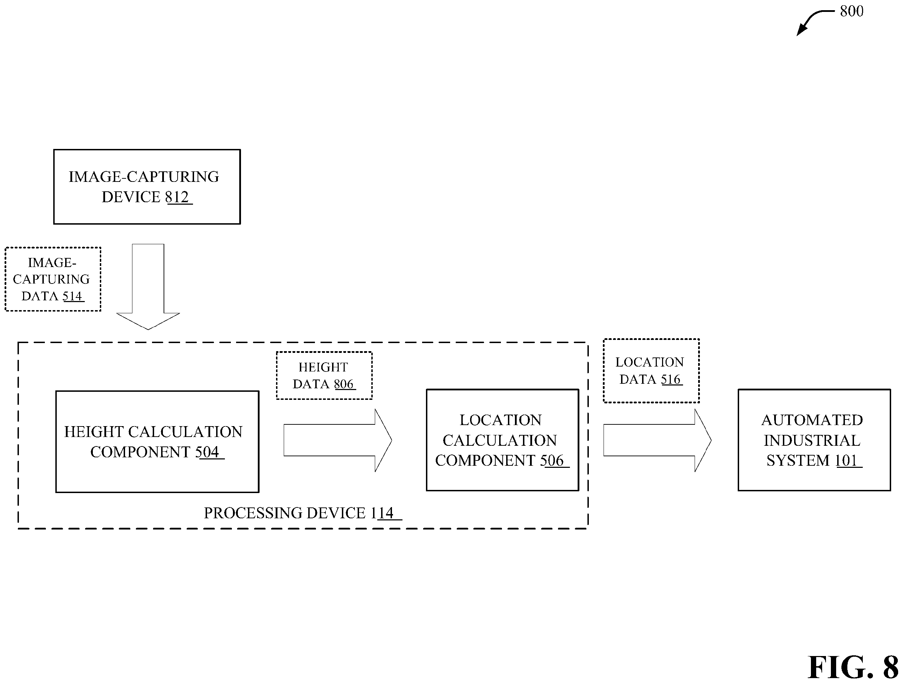

FIG. 8 illustrates a system 800 associated with one or more described features of one or more embodiments of the disclosure. The system 800 includes an image-capturing device 812, the processing device 114 and the automated industrial system 101. In an embodiment, the image-capturing device 812 can correspond to the image-capturing device 112. In another embodiment, the image-capturing device 812 can correspond to an image-capturing device from the set of image capturing devices 112_{1-N} and/or the set of image capturing devices 312_{1-N}. In an embodiment, the image-capturing device 812 can generate the image-capturing data 514. Furthermore, the processing device 114 can employ the image-capturing data 514 to generate the location data 516. For example, in one or more embodiments, the height calculation component 504 of the processing device 114 can generate height data 806 based on the image-capturing data 514. Furthermore, the location calculation component 506 of the processing device 114 can generate the location data 516 based on the height data 806. In one or more embodiment, the processing device 114 can provide the location data 516 to the automated industrial system 101. For instance, the automated industrial system 101 can employ the location data 516 to determine one or more movement commands for one or more portions of the automated industrial system 101. In one example, the automated industrial system 101 can employ the location data 516 to determine one or more movement commands for the robot arm portion 106 of the automated industrial system 101. In another example, the automated industrial system 101 can additionally or alternatively employ the location data 516 to determine one or more gripping commands for the end effector 108 of the automated industrial system 101.

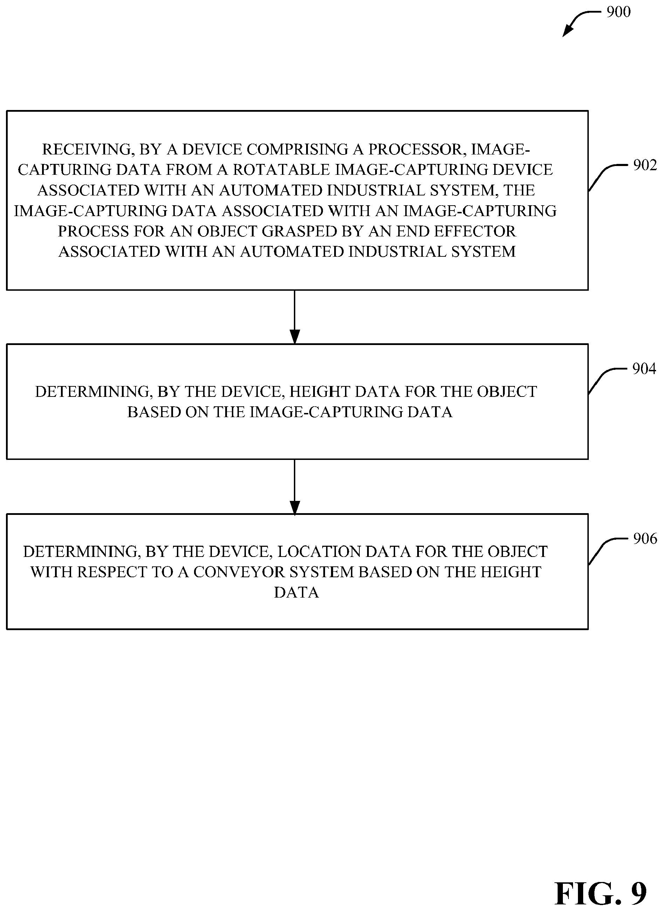

FIG. 9 illustrates a computer-implemented method 900 for facilitating object height detection for palletizing operations and/or depalletizing operations in accordance with one or more embodiments described herein. The computer-implemented method 900 can be associated with the processing device 114, for example. In one or more embodiments, the computer-implemented method 900 begins with receiving, by a device comprising a processor (e.g., by the height calculation component 504), image-capturing data from a rotatable image-capturing device associated with an automated industrial system, the image-capturing data associated with an image-capturing process for an object grasped by an end effector associated with an automated industrial system (block 902). In an embodiment, the image-capturing data is LiDAR data provided by the rotatable image-capturing device. In another embodiment, the automated industrial system is a robotics system (e.g., an industrial robotics system). The object can be a physical item, an element, a device, or the like that is to be transported via a conveyor system. For example, the object can be a package, a parcel, a box, a case, a carton, a pallet and/or another object to be transported via a conveyor system. In certain embodiments, the object can be a dynamic object with a location that is not fixed. For example, the object can be shipped-in, shipped-out, or otherwise moved via the conveyor system. The object can also comprise a certain height, a certain size, a certain shape, a certain color, and/or another physical characteristic. In an embodiment, object can be obtained from a pallet to perform one or more depalletizing operations associated with the object such that the object can be placed on a conveyor belt. In another embodiment, the object can be obtained from a conveyor belt to perform one or more palletizing operations associated with the object such that the object can be placed on a pallet.

The computer-implemented method 900 further includes determining, by the device (e.g., by the height calculation component 504), height data for the object based on the image-capturing data (block 904). The height data can be a predicted height between a top surface of the object and a bottom surface of the object. In an embodiment, the height data can be determined based on a start of an image-capturing process associated with the object and an end of the image-capturing process associated with the object. In an embodiment, the start of the image-capturing process and/or the end of the image-capturing process can correspond to certain degree of variation and/or a certain pattern in the image-capturing data. In certain embodiments, the height data can be determined based on distance data for the rotatable image-capturing device (e.g., a degree of rotation by the rotatable image-capturing device) during the image-capturing process associated with the object. For example, the degree of rotation by the rotatable image-capturing device can correspond to a distance traveled by the rotatable image-capturing device during the image-capturing process. In certain embodiments, the height data can be determined based on distance data for a robot arm portion attached to the end effector during an image-capturing process associated with the object. For example, the location data can correspond to a distance between a starting coordinate and an ending coordinate of the robot arm portion attached to the end effector during the image-capturing process.

The computer-implemented method 900 further includes determining, by the device (e.g., by the location calculation component 506), location data for the object with respect to a conveyor system based on the height data (block 906). For example, the location data for the object with respect to a conveyor belt can be determined based on the height data. In another example, the location data for the object with respect to a pallet can be determined based on the height data. In certain embodiments, the location data can correspond to one or more movement commands for the robot arm portion. For example, the location data can correspond to an ending coordinate of the robot arm portion for a palletizing operation or a depalletizing operation. In another example, the location data can correspond to a coordinate for the robot arm portion to initiate control of a gripper command for the end effector with respect to the object.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The hardware used to implement the various illustrative logics, logical blocks, modules, and circuits described in connection with the aspects disclosed herein may include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor may be a microprocessor, but, in the alternative, the processor may be any processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, or in addition, some steps or methods may be performed by circuitry that is specific to a given function.

In one or more example embodiments, the functions described herein may be implemented by special-purpose hardware or a combination of hardware programmed by firmware or other software. In implementations relying on firmware or other software, the functions may be performed as a result of execution of one or more instructions stored on one or more non-transitory computer-readable media and/or one or more non-transitory processor-readable media. These instructions may be embodied by one or more processor-executable software modules that reside on the one or more non-transitory computer-readable or processor-readable storage media. Non-transitory computer-readable or processor-readable storage media may in this regard comprise any storage media that may be accessed by a computer or a processor. By way of example but not limitation, such non-transitory computer-readable or processor-readable media may include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media may be referred to herein as a computer program product.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the supply management system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

## Claims

1. A system, comprising:
an automated industrial system that comprises at least a column portion, a robot arm portion, and an end effector configured to grasp an object;
an image-capturing device mounted onto the automated industrial system and configured to rotate, based on movement of the robot arm portion, to scan the object grasped by the end effector and to generate image-capturing data associated with the object; and
a processing device configured to determine height data for the object based on the image-capturing data, and to determine location data for the object with respect to a conveyor system based on the height data.

2. The system of claim 1, wherein the image-capturing device is mounted onto the column portion of the automated industrial system.

3. The system of claim 1 or 2, wherein the column portion associated with the image-capturing device is attached to the robot arm portion.

4. The system of any one of claims 1-3, wherein the processing device is configured to identify, based on the image-capturing data, a start of an image-capturing process associated with the object and an end of the image-capturing process associated with the object, and wherein the processing device is configured to determine the height data for the object based on the start of the image-capturing process and the end of the image-capturing process.

5. The system of any one of claims 1-4, wherein the processing device is configured to determine the height data based on distance data for the image-capturing device during an image-capturing process associated with the object.

6. The system of any one of claims 1-5, wherein the image-capturing device is a LiDAR device configured to generate LiDAR data associated with the object, and wherein the processing device is configured to determine the height data for the object based on the LiDAR data.

7. The system of any one of claims 1-6, wherein the image-capturing device is configured to rotate with respect to the movement of the robot arm portion.

8. The system of any one of claims 1-7, wherein the processing device is configured to control a gripper command for the end effector with respect to the object based on the height data.

9. The system of any one of claims 1-8, wherein the processing device is configured to control a movement command for the robot arm portion with respect to the conveyor system based on the height data.

10. The system of claim 1, wherein the column portion associated with the image-capturing device is a first column portion, wherein the image-capturing device is mounted onto the first column portion, wherein the automated industrial system further comprises a second column portion attached to the robot arm portion, and wherein the first column portion is located at a certain distance from the second column portion.

11. The system of claim 1, wherein the image-capturing device is a first image-capturing device, wherein the image-capturing data is first image-capturing data, wherein the first image-capturing device is mounted onto the column portion, wherein the automated industrial system further comprises a second image-capturing device mounted onto the column portion and configured to rotate, based on the movement of the robot arm portion, to scan the object grasped by the end effector and to generate second image-capturing data associated with the object, and wherein the processing device is configured to determine the height data for the object based on the first image-capturing data and the second image-capturing data.

12. The system of claim 11, wherein the first image-capturing device and the second image-capturing device are arranged in a vertical line with respect to the column portion.
